(19) Europäisches Patentamt / European Patent Office / Office européen des brevets

(11) **EP 2 850 299 B1**

(12) **FASCICULE DE BREVET EUROPEEN**

(45) Date de publication et mention de la délivrance du brevet:
**22.06.2016 Bulletin 2016/25**

(21) Numéro de dépôt: **13728440.2**

(22) Date de dépôt: **07.05.2013**

(51) Int Cl.:
**F02B 29/04** *(2006.01)*        **F16K 11/085** *(2006.01)*
**F02M 26/02** *(2016.01)*

(86) Numéro de dépôt international:
**PCT/FR2013/051018**

(87) Numéro de publication internationale:
**WO 2013/171410 (21.11.2013 Gazette 2013/47)**

(54) **VANNE DE CIRCULATION DE FLUIDE, NOTAMMENT POUR VEHICULE AUTOMOBILE, ET DISPOSITIF DE CONDITIONNEMENT THERMIQUE COMPRENANT UNE TELLE VANNE**

FLÜSSIGKEITSDURCHLAUFVENTIL, INSBESONDERE FÜR EIN KRAFTFAHRZEUG, UND TEMPERATURREGELUNGSVORRICHTUNG MIT SOLCH EINEM VENTIL

FLUID FLOW VALVE, PARTICULARLY FOR A MOTOR VEHICLE, AND A TEMPERATURE REGULATION DEVICE INCLUDING ONE SUCH VALVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.05.2012 FR 1254435**

(43) Date de publication de la demande:
**25.03.2015 Bulletin 2015/13**

(73) Titulaire: **Valeo Systèmes De Contrôle Moteur
95800 Cergy St Christophe (FR)**

(72) Inventeurs:
• **LALLEMANT, Mathieu
  F-78600 Maisons-Laffitte (FR)**
• **GIRARDON, Franck
  F-78700 Conflans Sainte Honorine (FR)**
• **LEBRASSEUR, Patrick
  F-60240 Montagny En Vexin (FR)**

(74) Mandataire: **Garcia, Christine
Propriété Intellectuelle
Valeo Systèmes de Contrôle Moteur
14, avenue des Béguines
95800 Cergy St Christophe (FR)**

(56) Documents cités:
EP-A1- 1 363 013     DE-A1-102008 005 591
US-A- 3 471 021     US-A- 5 152 321
US-A- 5 207 246

**Description**

La présente invention concerne une vanne de circulation de fluide destinée plus particulièrement quoique non exclusivement à équiper les systèmes de circulation de fluide associés aux moteurs à combustion interne, qu'ils soient à essence ou Diesel, de véhicules, notamment de véhicules automobiles.

De telles vannes peuvent avoir des fonctionnalités diverses et, par exemple, quand elles sont prévues sur les moteurs Diesel à turbocompresseur, elles peuvent être utilisées pour doser la quantité d'air amenée dans la ligne d'admission du moteur, ou pour dériver une partie des gaz d'échappement circulant dans la ligne d'échappement et l'envoyer en direction de la ligne d'admission, notamment à des fins de traitement des oxydes d'azote. On parle alors de gaz d'échappement recirculés. Les vannes selon l'invention concernent ainsi, en particulier, les vannes permettant la circulation de gaz.

Dans les circuits de gaz d'échappement recirculés, il est connu d'utiliser des échangeurs de chaleur, dit refroidisseur de gaz d'échappement recirculés, permettant d'abaisser la température desdits gaz. Cependant, dans certains cas de fonctionnement, il n'est pas nécessaire de refroidir les gaz d'échappement. Il est alors intéressant de pouvoir les faire circuler vers la ligne d'admission du moteur sans passer par l'échangeur de chaleur. Les circuits de gaz d'échappement recirculés comprennent pour cela une voie refroidie munie de l'échangeur de chaleur et une voie non-refroidie, contournant la voie refroidie.

Il est ainsi connu des circuits de gaz d'échappement recirculés comprenant une première vanne permettant de doser la quantité de gaz d'échappement recirculés et une seconde vanne permettant d'orienter les gaz vers la voie refroidie ou vers la voie non-refroidie. On comprend que de tels circuits présentent des inconvénients en ce qu'ils nécessitent deux vannes distinctes.

On rencontre une situation comparable dans les lignes d'admission du moteur. En effet, dans celles-ci, il est connu d'utiliser des refroidisseurs d'air de suralimentation. Cependant, dans certains cas de fonctionnement, il n'est pas nécessaire de refroidir les gaz d'admission. Il est alors intéressant de pouvoir les faire circuler vers le moteur sans passer par le refroidisseur. Les circuits de gaz d'admission comprennent pour cela une voie refroidie munie du refroidisseur d'air de suralimentation et une voie non-refroidie, contournant la voie refroidie.

Il est ainsi connu des circuits d'alimentation en air du moteur comprenant une première vanne permettant de doser la quantité de gaz d'admission et une seconde vanne permettant d'orienter les gaz vers la voie refroidie ou vers la voie non-refroidie. On comprend que de tels circuits présentent eux-aussi des inconvénients en ce qu'ils nécessitent deux vannes distinctes.

La présente invention a pour but de remédier à ces inconvénients et concerne une vanne de circulation de fluide, notamment pour véhicule automobile, comportant un corps, apte à être traversé par ledit fluide, et un moyen d'obturation, disposé dans ledit corps et pouvant occuper, par rotation dudit moyen d'obturation par rapport audit corps, différentes positions angulaires.

Selon l'invention, ledit moyen d'obturation est configuré pour autoriser, en une première position angulaire, un passage du fluide d'une première entrée à une première sortie de la vanne et d'une seconde entrée à une seconde sortie de la vanne et, dans une seconde position angulaire, un passage du fluide de la première entrée à la seconde sortie à travers le corps. Ledit moyen d'obturation est en outre configuré pour assurer une fermeture progressive de la première entrée.

La vanne conforme à l'invention permet de la sorte plusieurs modes de circulation du fluide à partir de la seule rotation du moyen d'obturation.

La vanne peut être configurée pour que la première entrée et la seconde sortie soient de section circulaire.

Le moyen d'obturation peut être configuré pour que sa paroi latérale ait une épaisseur inférieure à la plus grande dimension transversale de l'ouverture formant l'une de la première entrée et de la deuxième sortie. La paroi latérale s'étend par exemple autour de l'axe de rotation du moyen d'obturation.

Selon différents modes de réalisation de l'invention qui pourront être pris ensemble ou séparément :

- ledit moyen d'obturation est configuré pour assurer ladite fermeture progressive de la première entrée à partir de ladite seconde position angulaire,
- ledit moyen d'obturation est configuré pour laisser ouvert un passage, à travers ledit corps, entre la première sortie et la seconde entrée lors de la fermeture progressive de ladite première entrée,
- ledit corps comprend un logement interne cylindrique, à section transversale circulaire, et ledit moyen d'obturation comporte deux parties d'obturations agencées dans un plan incliné par rapport audit logement cylindrique et coopérant avec la paroi latérale dudit logement par une génératrice périphérique de manière à assurer un contact étanche entre le moyen d'obturation et le corps en au moins deux positions angulaires,
- lesdites parties d'obturation comprennent chacune une partie inclinée, situées parallèlement l'une à l'autre et axialement décalées le long de l'axe (A) du logement,
- lesdites parties inclinées du moyen d'obturation sont conformées en un disque rotatif dont le bord périphérique constitue la génératrice de contact avec la paroi latérale du logement cylindrique, de manière à assurer un contact cylindre sur cylindre,
- les parties inclinées forment un angle de sensiblement 45° avec l'axe (A) du logement cylindrique du corps,
- ledit moyen d'obturation comporte une tige de commande qui est reliée auxdites parties inclinées pour les entraîner en rotation, ladite tige de commande étant disposée dans l'axe dudit logement cylindrique passant par le centre desdites parties inclinées,

- ladite tige et lesdites parties inclinées sont réalisées en une seule pièce,
- lesdites parties inclinées sont entrainées simultanément en rotation, par ladite tige de commande,
- ladite première sortie est située axialement entre ladite première entrée et ladite seconde sortie,
- ladite première entrée, ladite première sortie et /ou ladite seconde sortie sont radiales,
- ladite première entrée et ladite seconde sortie sont agencées parallèlement l'une par rapport à l'autre, d'un même côté dudit corps,
- ladite première entrée et ladite seconde sortie sont diamétralement opposées à ladite première sortie,
- ladite seconde entrée se trouve au niveau d'une extrémité axiale du corps, prévue à proximité de l'une desdites parties inclinées, située en vis-à-vis de ladite seconde sortie,
- ladite seconde entrée de fluide est axiale.

L'invention concerne également un dispositif de conditionnement de fluide comprenant une vanne telle que décrite plus haut.

Ledit dispositif comprend en outre, par exemple, un échangeur de chaleur, relié entre ladite première sortie et ladite seconde entrée, au niveau d'une voie, dite refroidie.

La vanne conforme à l'invention permet de la sorte de contourner ladite voie refroidie lorsqu'elle est dans ladite seconde position angulaire, voire lors de la fermeture progressive de ladite première entrée. On peut ainsi réaliser à la fois une dérivation de la voie refroidie et un dosage du fluide.

Différentes applications sont possibles. En particulier :

- ledit échangeur est configuré pour être un échangeur de gaz d'échappement recirculé et ladite vanne est configurée pour être une vanne de gaz d'échappement recirculé, ou
- ledit échangeur est configuré pour être un refroidisseur d'air de suralimentation et ladite vanne est configurée pour être une vanne doseuse d'air.

Différents modes de réalisation de l'invention, seront décrits ci-après en regard des figures annexées qui feront bien comprendre comment l'invention peut être réalisée. Sur ces figures, des références identiques désignent des éléments semblables.

Les figures 1, 2 et 3 sont des vues schématiques en plan d'une vanne et d'un dispositif de conditionnement conformes à l'invention, ladite vanne étant illustrée selon trois positions de fonctionnement respectives.

La figure 5 est une vue extérieure en plan d'une vanne d'un type simplifié, destinée à mieux faire comprendre le fonctionnement de la vanne conforme à l'invention telle qu'illustrée aux figures 1 à 3 précédentes.

La figure 6 montre, en perspective, le corps de la vanne de la figure 4.

La figure 7 montre en perspective le moyen d'obturation rotatif de la vanne de la figure 4.

La figure 8 représente, en perspective, en transparence, la vanne de la figure 4 avec le moyen d'obturation monté dans le corps de la vanne et dans une position de fermeture de celle-ci.

Les figures 9 et 10 représentent, en perspective en transparence, la vanne de la figure 4 avec le moyen d'obturation rotatif dans une position d'ouverture à +90° et -90°, respectivement.

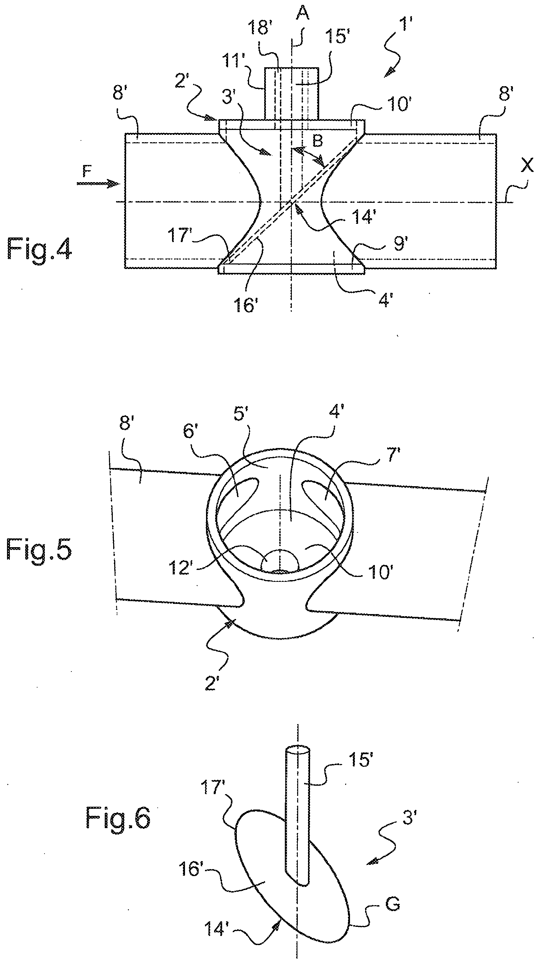

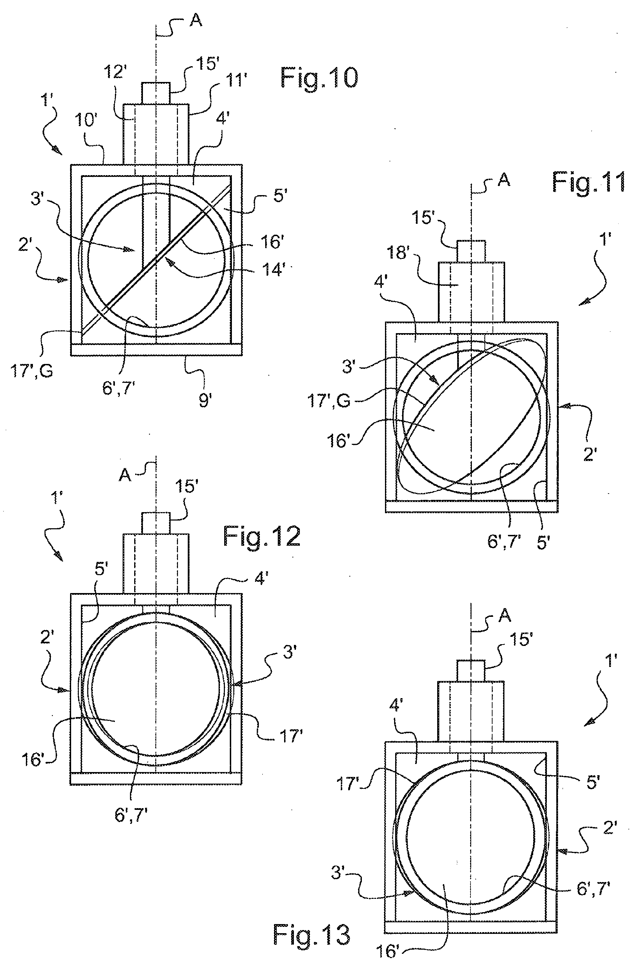

Le s figures 11 à 13 représentent respectivement, en coupe transversale, les positions du moyen d'obturation rotatif dans des positions d'ouverture de 45°, 5° et de fermeture de 0° ou 180° de la vanne de la figure 4.

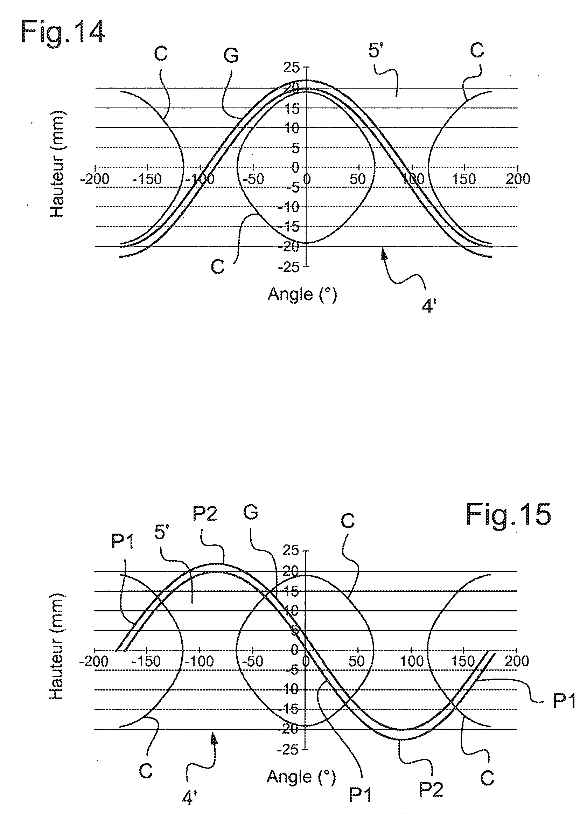

Les figures 14 et 15 montrent des graphiques représentant respectivement la zone de contact du disque du moyen d'obturation rotatif en position de fermeture et d'ouverture maximale, sur le logement du corps de ladite vanne de la figure 4, illustré à plat.

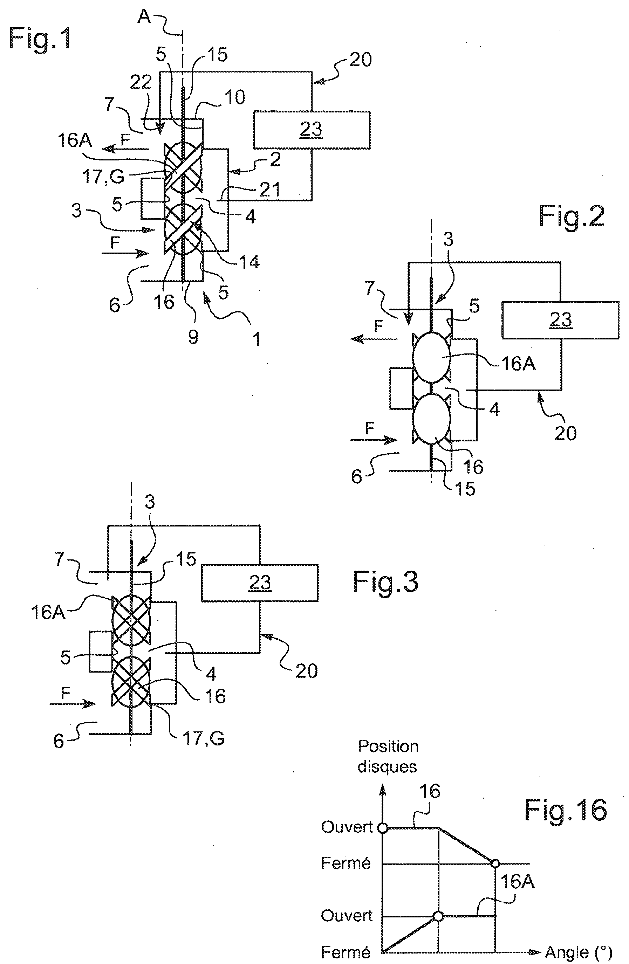

La figure 16 est un graphique représentant les lois d'ouverture de la vanne des figures 1 à 3.

Comme illustré aux figures 1 à 3, l'invention concerne une vanne 1 de circulation d'un fluide F, notamment pour véhicule automobile, comportant un corps 2, apte à être traversé par ledit fluide, et un moyen d'obturation 3, disposé dans ledit corps 2. Ledit moyen d'obturation 3 peut occuper, par rotation par rapport audit corps 2, différentes positions angulaires.

Selon l'invention, ledit moyen d'obturation 3 est configuré pour autoriser, en une première position angulaire dudit moyen d'obturation 3, un passage du fluide d'une première entrée 6 à une première sortie 21 de la vanne et d'une seconde entrée 22 à une seconde sortie 7 de la vanne, comme cela est illustré à la figure 1.

Il est également configuré pour autoriser, dans une seconde position angulaire, un passage du fluide de la première entrée 6 à la seconde sortie 7 à travers le corps 2, comme cela est illustré à la figure 2.

Ledit moyen d'obturation est encore configuré pour assurer une fermeture progressive de la première entrée, comme cela est illustré à la figure 3 qui correspond à une position angulaire dans laquelle ladite première entrée 6 se trouve en situation de fermeture totale.

Ledit moyen d'obturation 3 est ici configuré pour assurer ladite fermeture progressive de la première entrée 6 à partir de ladite seconde position angulaire.

Ledit moyen d'obturation 3 pourra encore être configuré pour laisser ouvert un passage, à travers ledit corps 2, entre la première sortie 21 et la seconde entrée 22, lors de la fermeture progressive de ladite première entrée 6. Le fluide circule alors directement de la première entrée 6 à la seconde sortie 7 pendant toute cette phase de fonctionnement.

Ledit corps 2 comprend ici un logement interne cylindrique 4, à section transversale circulaire.

Selon un premier mode de réalisation, non illustré, ledit moyen d'obturation pourra comprendre un boisseau cylindrique, muni de passages de fluide venant ou non en correspondance des première et/ou seconde entrées et/ou des première et/ou seconde sorties, en fonction de ses différentes positions angulaires.

Selon un autre mode de réalisation, ledit moyen d'obturation 3 comporte deux parties d'obturations 14 agencées dans un plan incliné par rapport audit logement cylindrique 4 et coopérant avec la paroi latérale 5 dudit logement par une génératrice périphérique de manière à assurer un contact étanche entre le moyen d'obturation 3 et le corps 2, en au moins deux positions angulaires. Plus précisément, dans ladite première position angulaire, une première desdites portions d'obturation 14, ici la portion d'obturation supérieure, assure un contact étanche avec le corps 2 et, dans la position angulaire de fermeture totale de la première entrée 6, l'autre portion d'obturation, ici la partie d'obturation inférieure, assure un contact étanche avec le corps 2.

Lesdites parties d'obturation comprennent chacune, par exemple, une partie inclinée 16, 16A, situées parallèlement l'une à l'autre et axialement décalées le long de l'axe (A) du logement 4. Une première des parties inclinées 16 est ici la partie inclinée inférieure et l'autre partie inclinée 16A est ici la partie inclinée supieure.

Lesdites parties inclinées 16, 16A du moyen d'obturation 3 sont conformées en un disque rotatif dont le bord périphérique 17 constitue la génératrice G de contact avec la paroi latérale 5 du logement cylindrique, de manière à assurer un contact cylindre sur cylindre.

Les parties inclinées 16, 16A forment ici un angle de sensiblement 45° avec l'axe (A) du logement cylindrique 4 du corps.

Ledit moyen d'obturation 3 comporte en outre une tige de commande 15 qui est reliée auxdites parties inclinées 14 pour les entraîner en rotation, ladite tige de commande 15 étant disposée dans l'axe dudit logement cylindrique 4 passant par le centre desdites parties inclinées 16, 16A.

Ladite tige 15 et lesdites parties inclinées 14 pourront être réalisées en une seule pièce.

La vanne 1' représentée sur les figures 4 à 15 est une vanne simplifiée destinée à mieux faire comprendre le principe de fonction de mode de réalisation conforme à l'invention, évoqué plus haut, dans une configuration à un seule portion inclinée 16'.

Comme dans le mode de réalisation de l'invention évoqué plus haut, ladite vanne 1' des figures 4 à 15 comporte deux composants essentiels, à savoir un corps 2' (figure 5) et un moyen d'obturation 3' (figure 6). En particulier, le corps 2' de la vanne 1' est muni d'un logement interne 4' qui est cylindrique d'axe A et de section circulaire et qui est délimité par une paroi latérale 5'. Ce logement interne peut être assimilé à un alésage. Dans la paroi de celui-ci débouchent radialement à l'axe A, une entrée 6' et une sortie 7' formant deux voies pour le fluide destiné à circuler à travers le logement de la vanne. Ces entrée 6' et sortie 7' sont ici, et en l'espèce contrairement à l'invention, alignées l'une par rapport à l'autre. Elles présentent ici un axe longitudinal X coupant perpendiculairement l'axe A du logement 2', et ont des diamètres identiques. Elles se prolongent au-delà de la paroi latérale 5' du logement par des conduits 8' intégrés au corps 2' et destinés au raccordement avec le circuit équipé de ladite vanne.

On voit par ailleurs, sur les figures 4, 5 et 7, que le logement cylindrique interne 4' est fermé totalement par un fond transversal 9' à l'une. de ses extrémités, tandis qu'à son extrémité opposée, se trouve un couvercle transversal 10' se prolongeant par un embout 11' avec un trou axial 12'. Celui-ci est traversé par le moyen d'obturation 3' qui coopère avec un dispositif d'entraînement non représenté, géré par une unité de commande connue en soi pour entraîner en rotation, autour de l'axe A, le moyen d'obturation 3'.

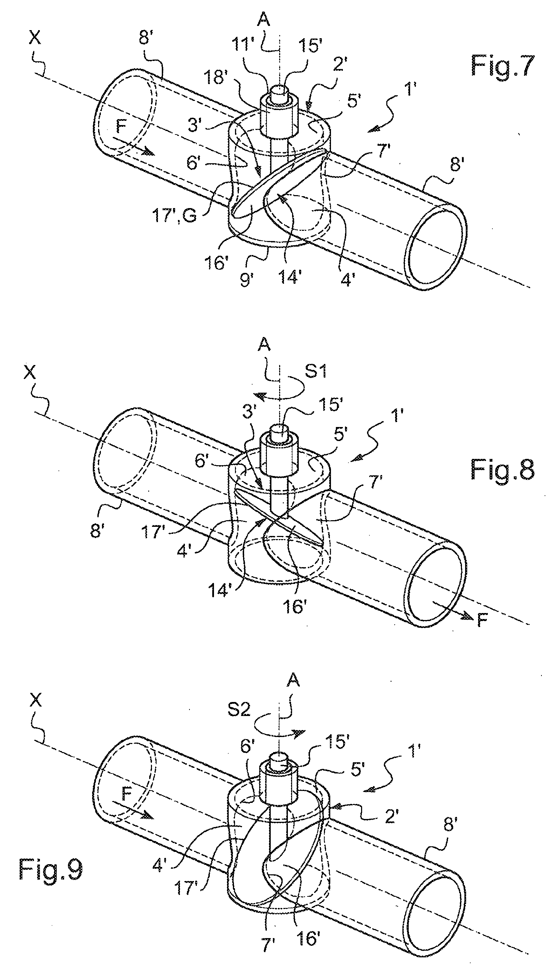

Comme on le voit mieux en regard des figures 6 et 7, ce dernier présente conformément à l'invention une partie inclinée d'obturation 14' et une tige de liaison 15'. En particulier, la partie inclinée 14' est conformée en un volet elliptique 16' disposé dans un plan incliné par rapport à l'axe A du logement cylindrique circulaire 2' et centré sur ledit axe A, de façon que son bord périphérique 17' soit en contact constant avec la paroi latérale 5' du logement 4' de manière à isoler l'entrée 6' et la sortie 7' dans au moins une position angulaire donnée du moyen d'obturation pour interrompre la circulation du fluide, ou à mettre en communication fluidique l'entrée 6' et la sortie 7' avec un débit réglable selon l'ouverture angulaire donnée au volet d'obturation. Ce bord périphérique 17' constitue ainsi une génératrice G toujours en contact étanche avec la paroi latérale 5' du logement.

Par « incliné », on entend compris strictement entre 0° et 90°. Par « volet », on entend une pièce présentant deux surfaces inclinées par rapport à l'axe A et reliées par le bord périphérique 17'. Lesdites surfaces inclinées sont éventuellement parallèles entre elles. La pièce présente une faible épaisseur, à savoir une distance comprise entre lesdites surfaces inclinées très inférieures au diamètre du corps 2', notamment dix fois inférieures. Il s'agit, par exemple, d'un disque.

Des considérations géométriques sont prises pour assurer le bon fonctionnement de la vanne 1'. Le volet 16' à une forme elliptique de grand-axe supérieur au diamètre du logement circulaire 4' et de petit-axe sensiblement inférieur au diamètre du logement circulaire 4'. La tige de liaison 15' est agencée suivant l'axe A du logement, de sorte à être centrée sur le disque inclinée, avec l'angle B entre le plan incliné du disque et l'axe A égal ici à 45°. Pour avoir un contact constant avec la paroi latérale 5' du logement, le grand axe du disque 16' est donc sensiblement égal au diamètre du logement multiplié par $\sqrt{2}$. Ce contact peut être défini comme étant un contact cylindre/cylindre entre la paroi 5' de section circulaire du logement 4' et la génératrice G correspondant au bord périphérique 17' du disque 16' incliné et qui est circulaire en projection sur un plan perpendiculaire à l'axe de rotation du volet.

On constate que le montage du moyen d'obturation 3' dans le logement 4' du corps de la vanne ne nécessite aucune opération de réglage fastidieuse, seule une mise en butée axiale du moyen 3' dans le logement étant exigée pour centrer le disque 16' par rapport aux entrée et sortie de fluide.

La tige 15' est associée, par l'une de ses extrémités, au disque 16', par assemblage ou surmoulage, ou elle est formée avec le disque, de sorte à avoir un moyen d'obturation monobloc 3'. A titre d'exemple, le disque 16' peut être en plastique et la tige 15' en métal ou inversement, ou les deux peuvent être en matière plastique ou en métal selon la réalisation monobloc ou composite choisie. L'autre extrémité de la tige traverse le trou axial 12' de l'embout 11' par l'intermédiaire d'un palier de guidage 18', et est reliée au dispositif d'entraînement en rotation, non représenté.

Dans la position illustrée en regard des figures 7 et 13, le disque incliné 16' du moyen d'obturation 3 isole l'entrée 6' de la sortie 7', empêchant la circulation du fluide à travers la vanne 1'. Pour cela, on voit que le bord périphérique 17' du disque incliné 16' coopère avec étanchéité et complètement avec la paroi latérale 5' du logement cylindrique 4', à la manière d'une cloison séparant le logement en deux chambres internes distinctes et étanches, chacune tournée vers l'une des voies d'entrée 6' et de sortie 7' de passage du fluide. Cette position angulaire du disque incliné 16' et donc du moyen d'obturation 3' correspond à une fermeture de la vanne 1' avec pour point d'origine, une rotation angulaire nulle de 0° du moyen d'obturation 3, le dispositif d'entraînement de celui-ci via la tige 15' étant inactif.

Lorsque le dispositif d'entraînement est sollicité, il provoque la rotation du moyen d'obturation 3' selon l'angle souhaité correspondant à un débit déterminé du fluide à travers la vanne 1'. En regard des figures 8 et 10, le moyen d'obturation 3', via sa tige 15', a subi une rotation de +90° dans le sens horaire S1 autour de l'axe A, si bien que le disque incliné 16' a tourné dans le logement 4' pour se trouver dans un plan sensiblement parallèle aux conduits coaxiaux 8' délimitant l'entrée 6' et la sortie 7' du corps 2' de la vanne. Par suite de la rotation, le bord périphérique 17' n'est plus en contact total avec la paroi latérale 5' du logement, mais seulement partiel puisque des parties opposées du bord 17' se trouvent en regard des entrée et sortie circulaires 6' et 7'. Cette position angulaire effacée du disque permet le passage du fluide entre l'entrée 6' et la sortie 7' via le logement interne étanche 4' du corps, et correspond à une pleine ouverture de la vanne 1' pour laquelle le débit de circulation du fluide est maximal.

La position occupée par le disque incliné 16' et représentée en regard de la figure 9 est symétrique de la précédente, c'est-à-dire que le moyen d'obturation a tourné, sous l'action du dispositif d'entraînement, de -90° dans le sens anti-horaire S2 par rapport à la position de fermeture de 0°. Ainsi, le disque incliné 16' se trouve parallèle aux entrée 6' et sortie 7' coaxiales du fluide assurant un débit maximal à travers la vanne. On peut ainsi faire fonctionner la vanne 1' dans les deux sens depuis une position de fermeture centrale.

Une position intermédiaire du moyen d'obturation 3' est illustrée à titre d'exemple en regard de la figure 8, laquelle position correspond à une rotation de +45° du disque incliné 16' autour de l'axe A. Le bord 17' du disque est alors en partie en regard de l'entrée 6' et de la sortie 7', mettant en communication celles-ci pour le passage du fluide sous un débit moyen.

Quant à la figure 9, elle montre que le bord 17' du disque incliné 16' est en totalité en contact avec la paroi latérale 5' du logement lorsque le moyen d'obturation se trouve à environ 5° de la position de fermeture initiale de 0°. Cela signifie que le recouvrement total du disque 16' et du logement 4' permet d'accepter un défaut angulaire lors de l'assemblage sans diminuer le niveau d'étanchéité de la vanne. La fermeture de la vanne est finalement acquise sur une plage angulaire d'environ 10° (+ ou -5°).

On remarque aussi que, grâce à la conception du disque incliné dans un logement cylindrique avec contact cylindre-cylindre, la position de fermeture de la vanne peut être atteinte soit par le retour du moyen d'obturation 3', sous une rotation inverse, soit en effectuant une rotation supplémentaire pour amener le disque en position de fermeture. Il peut ainsi être avantageusement utilisé indifféremment des deux côtés du fait que seul son bord périphérique fait contact avec la paroi latérale du logement. Un autre avantage de ce type de vanne, et qui s'applique lui aussi à l'invention, est que la position de la ou des parties inclinées 16', 16, 16A par rapport à la tige de commande permet de diminuer les interférences entre ladite tige et lesdites parties inclinées, contrairement aux volets de l'état de l'art qui sont dans le plan de leur axe d'entrainement, ce qui pose de nombreux problèmes d'étanchéité, en particulier au niveau du passage de l'axe dans le corps de la vanne.

Les graphiques des figures 14 et 15 mettent bien en évidence la position du disque incliné 16' selon la hauteur (mm) de la paroi latérale 5' du logement, laquelle paroi de 360° est développée de -180° à +180° pour être représentée en plan.

Sur la figure 14, le disque incliné 16' du moyen d'obturation 3' occupe la position de fermeture de la vanne 1' (figures 7 et 13), c'est-à-dire avec une rotation nulle dudit moyen. Par rapport à l'entrée 6' et à la sortie 7', illustrées par le contour C des conduits 8' les délimitant, on voit bien que le bord périphérique 17' formant la génératrice G du disque, représentée en plan selon une sinusoïde, est constamment en contact avec la paroi latérale 5' du logement. De la sorte, la fermeture de la vanne est totale, l'entrée 6' et la sortie 7' étant parfaitement isolées l'une de l'autre, ce qui interdit toute circulation du fluide à travers la vanne 1.

En regard de la figure 15, le disque incliné 16' occupe des positions de pleine ouverture de la vanne (figures 8, 9 et 10), c'est-à-dire avec une rotation de +/- 90° du moyen d'obturation 3'. Dans ce cas, on voit bien que le bord périphérique 17' sous forme de sinusoïde (décalée de $\pi/2$ par rapport à la figure 11) passe alors en grande partie (référence P1) par les entrée et sortie 6' et 7', au milieu de celles-ci. Seule l'autre partie (référence P2) du bord 17' reste au contact de la paroi latérale 5' du logement, ce qui montre bien la pleine ouverture de la vanne 1' pour un débit de fluide maximum, à travers elle.

Une telle vanne assure par conséquent l'étanchéité dans les deux sens de fermeture par l'adaptation du disque incliné dans le logement circulaire (contact cylindre-cylindre). En outre, comme le bord du disque se déplace linéairement sur la paroi cylindrique, cela permet d'éviter l'encrassement entre le disque et la paroi et d'assurer un auto-nettoyage de la vanne. Ces avantages sont aussi offerts par la vanne conforme à l'invention, dans le mode de réalisation évoqué en regard des figures 1 à 3, dans lequel on constate que les caractéristiques en cause sont également présentes.

Si l'on revient maintenant aux figures 1 à 3, on constate que, dans le cas de l'invention, ladite première sortie 21 est ici située axialement entre ladite première entrée 6 et ladite seconde sortie 7. En l'occurrence, ladite première entrée 6 est située à proximité d'un fond transversal 9 fermant le corps 2 à l'une de ses extrémités, tandis qu'à son extrémité opposée, se trouve un couvercle transversal 10 à proximité duquel se trouve la seconde sortie 7.

Ledit couvercle 10 est traversé par le moyen d'obturation 3 qui coopère avec un dispositif d'entraînement, non représenté, géré par une unité de commande connue en soi pour entraîner en rotation, autour de l'axe A, le moyen d'obturation 3.

Ladite première entrée 6, ladite première sortie 21 et ladite seconde sortie 7 sont, par exemple, radiales. Ladite première entrée 6 et ladite seconde sortie 7 pourront en outre être agencées parallèlement l'une par rapport à l'autre, d'un même côté dudit corps 2. Ladite première entrée 6 et ladite seconde sortie 7 sont ici diamétralement opposées à ladite première sortie 21.

Ladite seconde entrée 22 se trouve ici au niveau d'une extrémité axiale du corps 2, prévue à proximité de l'une 16A desdites parties inclinées, située en vis-à-vis de ladite seconde sortie 7. Ladite seconde entrée 22 se trouve en particulier, dans l'exemple illustré, au niveau du couvercle 10. Elle pourra être orientée axialement.

Ainsi, la première entrée de fluide 6 est située en amont de la première partie inclinée 16, la première sortie 21 est située en aval de ladite première partie inclinés 16 et en amont de ladite seconde partie inclinée 16A, la seconde entrée 22 est située en aval de ladite seconde partie inclinée 16A et/ou la seconde sortie 7 est située en aval de la seconde partie inclinée 16A.

Autrement dit, comparé à la réalisation simplifiée des figures 4 à 15, la vanne 1 selon le mode de réalisation des figures 1 à 3, conforme à l'invention, comporte un second disque incliné 16A, agencé en série avec le disque incliné initial (premier) 16, dans le logement 4, selon l'axe A. On entend par là que les disques 16, 16A sont l'un à la suite de l'autre ou l'un en dessous de l'autre le long de l'axe A. En particulier, les deux disques inclinés 16, 16A sont commandés par la même tige 15 reliée au dispositif d'entraînement en rotation du moyen d'obturation 3 et ils sont disposés dans le logement interne 4. La tige est alors montée, à des fins de guidage et de centrage, dans des paliers au niveau des fonds transversaux opposés 9 et 10 du corps. Dans la paroi 5 du logement sont prévus la première entrée 6 et la seconde sortie 7 qui sont agencées, non plus selon le même axe, mais en parallèle dans un plan passant par l'axe A, avec l'entrée 6 en regard du disque 16 par exemple, et la sortie 7 en regard du disque 16A. Une voie refroidie 20 comprenant un refroidisseur 23 est raccordée par la première sortie 21, située ici axialement entre les deux disques, et par la seconde entrée 22, située ici en aval du disque 16A.

Fonctionnellement, comme déjà indiqué, la vanne est configurée pour autoriser une circulation du fluide le long de l'axe A du logement, en au moins une position angulaire du moyen d'obturation, à savoir la seconde position angulaire, et, en au moins une autre position angulaire du moyen d'obturation, à savoir la première position angulaire, une circulation dans la voie refroidie 20 raccordée au logement interne du corps, respectivement entre les deux parties inclinées du moyen d'obturation et en aval de la seconde partie inclinée. Plus précisément, quand les deux disques inclinés 16 et 16A du moyen d'obturation 3 sont commandés pour occuper la position illustrée sur la figure 1, le disque 16 est dans sa plage d'ouverture, tandis que le disque 16A est en position fermée, son bord périphérique 17A étant en contact total avec la paroi 5 du logement 4. Ainsi, le fluide provenant de la première entrée 6 parvient dans le logement en traversant le disque 16 puis, comme l'autre disque 16A est fermé, entre dans la boucle de dérivation 20 par la première sortie 21 et traverse le refroidisseur 23. Puis, il ressort refroidi dudit refroidisseur 23 et entre à nouveau dans la vanne 1 par la seconde entrée 22 pour se diriger vers la sortie 7 de la vanne qui permet, dans cette position, le refroidissement du fluide.

Lorsque les deux disques inclinés 16 et 16A, commandés par la même tige 15, pivotent de 90° par rapport à l'axe A du logement, figure 2, ils sont tous les deux ouverts, de sorte à laisser passer le fluide directement par le logement qui fait alors voie de dérivation, sans passer par la voie refroidie 20. Les pressions à l'entrée et à la sortie de ladite voie refroidie 20 sont alors les mêmes, avec aucune circulation à l'intérieur.

Lorsque les deux disques inclinés 16 et 16A pivotent encore de 90°, l'un 16A reste dans sa plage d'ouverture, tandis que l'autre 16 prend sa position de fermeture en obturant, par son bord 17 en contact total avec la paroi latérale 5, l'arrivée du fluide dans le logement du corps de vanne. Les pressions en entrée et en sortie de la voie refroidie 20 sont là aussi les mêmes de sorte qu'il n'y a pas de circulation. La vanne 1 est en position d'arrêt.

On pourra noter que, contrairement au disque 16' de la vanne simplifiée des figures 4 à 15, les disques 16, 16A du mode de réalisation, conforme à l'invention, évoqué plus haut n'ont qu'une seule position de fermeture au lieu de deux, la position de fermeture de l'un se trouvant à 180° de la position de fermeture de l'autre.

Le diagramme de la figure 25 résume le comportement de la vanne de commande avec ses deux disques inclinés d'obturation.

Pour une position du moyen d'obturation à 0°, correspondant à ladite première position angulaire, le disque 16 est ouvert et le disque 16A est fermé de sorte que le fluide issu de la première entrée 6 passe à 100% par la voie refroidie 20.

Pour une position à 90°, les deux disques sont ouverts mais la voie refroidie 20 n'est pas utilisée car il y a la même pression entre l'entrée et la sortie de ladite voie; le fluide circule à 100% par la voie interne du logement 4, sans refroidissement.

Pour une position à 180°, le disque 16 est fermé de sorte que l'air n'entre pas dans la vanne ; la position de l'autre disque 16A n'a donc pas d'importance.

La position comprise entre 90° et 180° correspond à la portion de dosage variable du fluide.

**Revendications**

1. Vanne de circulation d'un fluide, notamment pour véhicule automobile, comportant un corps (2), apte à être traversé par ledit fluide, et un moyen d'obturation (3), disposé dans ledit corps et pouvant occuper, par rotation dudit moyen d'obturation (3) par rapport audit corps (2), différentes positions angulaires, ledit moyen d'obturation (3) étant configuré pour autoriser, en une première position angulaire, un passage du fluide d'une première entrée (6) à une première sortie (21) de la vanne et d'une seconde entrée (22) à une seconde sortie (7) de la vanne et, dans une seconde position angulaire, un passage du fluide de la première entrée (6) à la seconde sortie (7) à travers le corps (2), **caractérisé en ce que** ledit moyen d'obturation (3) est en outre configuré pour assurer une fermeture progressive de la première entrée (6).

2. Vanne selon la revendication 1 dans laquelle ledit moyen d'obturation (3) est configuré pour assurer ladite fermeture progressive de la première entrée (6) à partir de ladite seconde position angulaire.

3. Vanne selon l'une quelconque des revendications 1 ou 2 dans laquelle ledit moyen d'obturation (3) est configuré pour laisser ouvert un passage, à travers ledit corps (2), entre la première sortie (21) et la seconde entrée (22), lors de la fermeture progressive de ladite première entrée (6).

4. Vanne selon l'une quelconque des revendications précédentes dans laquelle ledit corps (2) comprend un logement interne cylindrique (4), à section transversale circulaire, et ledit moyen d'obturation (3) comporte deux parties d'obturations (14) agencées dans un plan incliné par rapport audit logement cylindrique (4) et coopérant avec la paroi latérale (5) dudit logement par une génératrice périphérique de manière à assurer un contact étanche entre le moyen d'obturation (3) et le corps (2) en au moins deux positions angulaires.

5. Vanne selon la revendication 4, dans laquelle lesdites parties d'obturation comprennent chacune une partie inclinée (16, 16A), situées parallèlement l'une à l'autre et axialement décalées le long de l'axe (A) du logement (4).

6. Vanne selon la revendication 5, dans laquelle ledit moyen d'obturation (3) comporte une tige de commande (15) qui est reliée auxdites parties inclinées (14) pour les entraîner en rotation, ladite tige de commande (15) étant disposée dans l'axe dudit logement cylindrique (4) passant par le centre desdites parties inclinées (16, 16A).

7. Vanne selon la revendication 6, dans laquelle ladite tige (15) et lesdites parties inclinées (14) sont réalisées en une seule pièce.

8. Vanne selon l'une quelconque des revendications 5 à 7 dans laquelle ladite première sortie (21) est située axialement entre ladite première entrée (6) et ladite seconde sortie (7).

9. Vanne selon l'une quelconque des revendications 5 à 8 dans laquelle ladite première entrée (6), ladite première sortie (21) et /ou ladite seconde sortie (7) sont radiales.

10. Vanne selon l'une quelconque des revendications 5 à 9 dans laquelle ladite première entrée (6) et ladite seconde sortie (7) sont agencées parallèlement l'une par rapport à l'autre, d'un même côté dudit corps (2).

11. Vanne selon l'une quelconque des revendications 5 à 10 dans laquelle ladite première entrée (6) et ladite seconde sortie (7) sont diamétralement opposées à ladite première sortie (21).

12. Vanne selon l'une quelconque des revendications 5 à 11 dans laquelle ladite seconde entrée (22) se trouve au niveau d'une extrémité axiale du corps, prévue à proximité de l'une (16A) desdites parties inclinées, située en vis-à-vis de ladite seconde sortie (7).

13. Dispositif de conditionnement de fluide comprenant une vanne selon l'une quelconque des revendications précédentes.

14. Dispositif selon la revendication 13 comprenant en outre un échangeur de chaleur (23), relié entre ladite première sortie (21) et ladite seconde entrée (22), au niveau d'une voie (20), dite refroidie.

15. Dispositif selon la revendication 14 dans lequel,

   - ledit échangeur (23) est configuré pour être un échangeur de gaz d'échappement recirculé et ladite vanne (1) est configurée pour être une vanne de gaz d'échappement recirculé, ou
   - ledit échangeur (23) est configuré pour être un refroidisseur d'air de suralimentation et ladite vanne (1) est configurée pour être une vanne doseuse d'air.

**Patentansprüche**

1. Flüssigkeitsdurchlaufventil, insbesondere für ein Kraftfahrzeug, umfassend einen Körper (2), der geeignet ist, von der Flüssigkeit durchquert zu werden, und ein Verschlussmittel (3), das in dem Körper angeordnet ist und durch Rotation des Verschlussmittels (3) gegenüber dem Körper (2) verschiedene Winkelpositionen einnehmen kann, wobei das Verschlussmittel (3) konfiguriert ist, um in einer ersten Winkelposition einen Durchgang der Flüssigkeit von einem ersten Einlass (6) zu einem ersten Auslass (21) des Ventils und von einem zweiten Einlass (22) zu einem zweiten Auslass (7) des Ventils und in einer zweiten Winkelposition einen Durchgang der Flüssigkeit von dem ersten Einlass (6) zu dem zweiten Auslass (7) durch den Körper (2) zu ermöglichen, **dadurch gekennzeichnet, dass** das Verschlussmittel (3) ferner konfiguriert ist, um ein progressives Schließen des ersten Einlasses (6) zu gewährleisten.

2. Ventil nach Anspruch 1, wobei das Verschlussmittel (3) konfiguriert ist, um das progressive Schließen des ersten Einlasses (6) ausgehend von der zweiten Winkelposition zu gewährleisten.

3. Ventil nach einem der Ansprüche 1 oder 2, wobei das Verschlussmittel (3) konfiguriert ist, um einen Durchgang durch den Körper (2) zwischen dem ersten Auslass (21) und dem zweiten Einlass (22) während des progressiven Schließens des ersten Einlasses (6) offen zu lassen.

4. Ventil nach einem der vorhergehenden Ansprüche, wobei der Körper (2) ein zylindrisches inneres Gehäuse (4) mit kreisförmigem Querschnitt aufweist und das Verschlussmittel (3) zwei Verschlussteile (14) aufweist, die in einer Ebene angeordnet sind, die in Bezug auf das zylindrische Gehäuse (4) geneigt ist und mit der Seitenwand (5) des Gehäuses durch eine periphere Kante derart zusammenwirkt, um einen dichten Kontakt zwischen dem Verschlussmittel (3) und dem Körper (2) in mindestens zwei Winkelpositionen zu gewährleisten.

5. Ventil nach Anspruch 4, wobei die Verschlussteile jeweils einen geneigten Teil (16, 16A) aufweisen, die parallel zueinander und axial versetzt entlang der Achse (A) des Gehäuses (4) angeordnet sind.

6. Ventil nach Anspruch 5, wobei das Verschlussmittel (3) eine Steuerstange (15) aufweist, die mit den geneigten Teilen (14) verbunden ist, um sie in Drehung zu versetzen, wobei die Steuerstange (15) in der Achse des zylindrischen Gehäuses (4) angeordnet ist, die durch die Mitte der geneigten Teile (16, 16A) läuft.

7. Ventil nach Anspruch 6, wobei die Stange (15) und die geneigten Teile (14) aus einem einzigen Stück hergestellt sind.

8. Ventil nach einem der Ansprüche 5 bis 7, wobei der erste Auslass (21) axial zwischen dem ersten Einlass (6) und dem zweiten Auslass (7) angeordnet ist.

9. Ventil nach einem der Ansprüche 5 bis 8, wobei der erste Einlass (6), der erste Auslass (21) und/oder der zweite Auslass (7) radial sind.

10. Ventil nach einem der Ansprüche 5 bis 9, wobei der erste Einlass (6) und der zweite Auslass (7) parallel zueinander auf einer gleichen Seite des Körpers (2) angeordnet sind.

11. Ventil nach einem der Ansprüche 5 bis 10, wobei der erste Einlass (6) und der zweite Auslass (7) diametral entgegengesetzt zu dem ersten Auslass (21) sind.

12. Ventil nach einem der Ansprüche 5 bis 11, wobei sich der zweite Einlass (22) an einem axialen Ende des Körpers befindet, der in der Nähe von einem (16A) der geneigten Teile vorgesehen ist, der gegenüber von dem zweiten Auslass (7) angeordnet ist.

**13.** Vorrichtung zur Temperaturregelung einer Flüssigkeit, umfassend ein Ventil nach einem der vorhergehenden Ansprüche.

**14.** Vorrichtung nach Anspruch 13, ferner umfassend einen Wärmetauscher (23), der zwischen dem ersten Auslass (21) und dem zweiten Einlass (22) an einem sogenannten gekühlten Weg (20) angeschlossen ist.

**15.** Vorrichtung nach dem Anspruch 14, wobei

- der Wärmetauscher (23) konfiguriert ist, um ein AGR-Wärmetauscher zu sein und das Ventil (1) konfiguriert ist, um ein Abgasrückführventil zu sein, oder
- der Wärmetauscher (23) konfiguriert ist, um ein Ladeluftkühler zu sein und das Ventil (1) konfiguriert ist, um ein Luftdosierventil zu sein.

## Claims

**1.** Fluid flow valve, particularly for a motor vehicle, comprising a body (2) capable of being traversed by said fluid, and a sealing means (3) which is arranged in said body and which is able to occupy different angular positions by the rotation of said sealing means (3) relative to said body (2), said sealing means (3) being configured so as to permit, in a first angular position, the fluid to pass from a first inlet (6) to a first outlet (21) of the valve and from a second inlet (22) to a second outlet (7) of the valve and, in a second angular position, to permit the fluid to pass from the first inlet (6) to the second outlet (7) through the body (2), **characterized in that** said sealing means (3) is further configured to ensure the gradual closing of the first inlet (6).

**2.** Valve according to Claim 1, in which said sealing means (3) is configured so as to ensure said gradual closing of the first inlet (6) from said second angular position.

**3.** Valve according to either of Claims 1 and 2, in which said sealing means (3) is configured so as to leave open a passage through said body (2) between the first outlet (21) and the second inlet (22), during the gradual closing of said first inlet (6).

**4.** Valve according to any one of the preceding claims, in which said body (2) comprises a cylindrical internal housing (4) of circular cross section and said sealing means (3) comprises two sealing parts (14) arranged in a plane which is inclined relative to said cylindrical housing (4) and cooperating with the lateral wall (5) of said housing by a peripheral generatrix so as to ensure a sealed contact between the sealing means (3) and the body (2) in at least two angular positions.

**5.** Valve according to Claim 4, in which said sealing parts each comprise an inclined part (16, 16A), located in parallel with one another and axially offset along the axis (A) of the housing (4).

**6.** Valve according to Claim 5, in which said sealing means (3) comprises a control rod (15) which is connected to said inclined parts (14) to drive said parts in rotation, said control rod (15) being arranged in the axis of said cylindrical housing (4) passing via the center of said inclined parts (16, 16A).

**7.** Valve according to Claim 6, in which said rod (15) and said inclined parts (14) are produced in one piece.

**8.** Valve according to any one of Claims 5 to 7, in which said first outlet (21) is located axially between said first inlet (6) and said second outlet (7).

**9.** Valve according to any one of Claims 5 to 8, in which said first inlet (6), said first outlet (21) and/or said second outlet (7) are radial.

**10.** Valve according to any one of Claims 5 to 9, in which said first inlet (6) and said second outlet (7) are arranged in parallel with one another on the same side of said body (2).

**11.** Valve according to any one of Claims 5 to 10, in which said first inlet (6) and said second outlet (7) are diametrically opposite said first outlet (21).

**12.** Valve according to any one of Claims 5 to 11, in which said second inlet (22) is located in the region of an axial end of the body, provided in the vicinity of one (16A) of said inclined parts, located opposite said second outlet (7).

**13.** Regulation device for fluid comprising a valve according to any one of the preceding claims.

**14.** Device according to Claim 13, further comprising a heat exchanger (23) connected between said first outlet (21) and said second inlet (22) in the region of a so-called cooled line (20).

**15.** Device according to Claim 14 in which

- said exchanger (23) is configured so as to be a recirculated exhaust gas exchanger and said valve (1) is configured so as to be a recirculated exhaust gas valve, or
- said exchanger (23) is configured so as to be a charge air cooler and said valve (1) is configured so as to be an air metering valve.

Fig.1

Fig.2

Fig.3

Fig.16

Fig.4

Fig.5

Fig.6

Fig.7

Fig.8

Fig.9

Fig.10

Fig.11

Fig.12

Fig.13

Fig.14

Fig.15